# EUROPEAN PATENT APPLICATION

(11) **EP 4 361 778 A1**
(43) Date of publication of application: **01.05.2024**
(21) Application number: 22849695.6
(22) Date of filing: 30.05.2022
(51) Int. Cl.: G06F 3/041, G06F 1/16

(54) **DIGITIZER AND ELECTRONIC DEVICE INCLUDING SAME**

(30) Priority: 28.07.2021 KR 20210099087; 16.02.2022 KR 20220020342
(71) Applicant: Samsung Electronics Co., Ltd., Suwon-si, Gyeonggi-do 16677 (KR)
(72) Inventor: KIM, Seonghoon, Suwon-si, Gyeonggi-do 16677 (KR); PARK, Myeongsil, Suwon-si, Gyeonggi-do 16677 (KR); RYU, Bummoo, Suwon-si, Gyeonggi-do 16677 (KR); YOON, Jeonghyun, Suwon-si, Gyeonggi-do 16677 (KR)
(74) Representative: HGF
(86) International application number: PCT/KR2022/007641
(87) International publication number: WO 2023/008716

(57) **Abstract**

According to various embodiments, an electronic device may comprise: a first housing; a second housing; a hinge device for connecting the first housing and the second housing to each other so as to be foldable; a flexible display disposed to be supported by the first housing and the second housing, the flexible display comprising a folding area; and a digitizer disposed under the flexible display. The digitizer may comprise: a first digitizer part corresponding to at least a portion of the first housing; a second digitizer part corresponding to at least a portion of the second housing; and a connection part connecting the first digitizer part to the second digitizer part. The connection part may be formed to have an extra length longer than the amount of change in the length of the folding area in the folded state.

## Description

### [Technical Field]

Various embodiments of the disclosure relate to a digitizer and an electronic device including the same.

### [Background Art]

An electronic device is gradually becoming slimmer and is being improved to increase their rigidity, strengthen their design aspects, and differentiate their functional features. In addition, the electronic device is being developed to have various shapes, departing from a uniform rectangular shape. The electronic device may have a deformable structure that provides high portability and also provides a large-screen display in use. In connection with such a deformable structure, the electronic device (e.g., a foldable electronic device) may include at least two foldable housings that are folded or unfolded relative to each other. Also, the foldable electronic device may include a digitizer for detecting an input through an electronic pen. The digitizer should be arranged to have operational reliability consistent with the folding and unfolding operations of the foldable electronic device.

### [Disclosure of Invention]

### [Technical Problem]

The foldable electronic device may include a hinge module (e.g., a hinge structure, a hinge, or a hinge device), and first and second housings connected in opposite directions through the hinge module. The foldable electronic device may be operated in an in-folding and/or out-folding scheme as the first housing is rotated with respect to the second housing through the hinge module in a range of 0 to 360 degrees. The foldable electronic device may include a flexible display disposed to be supported at least in part through the first and second housings in an unfolded state. The flexible display may be provided with support force and bending characteristics through a support plate and a plurality of layers (e.g., a polymer layer such as a cushion layer) stacked in the inner space of the electronic device or under a display panel of the flexible display.

The foldable electronic device may include an electronic pen as an additional input tool. In addition, the foldable electronic device may include a digitizer disposed in the inner space to detect data input through the electronic pen.

In the case where the digitizer is integrally arranged to correspond to the first and second housings, stress due to the rigidity of the digitizer may be transferred to the upper layer during the frequent unfolding and folding operations of the foldable electronic device. This may cause a buckling phenomenon that the corresponding portion is crushed or bent. In the case where the digitizer is separated into two parts disposed in the first and second housings, the end of each separated digitizer may interfere with the housing during the folding operation. To avoid this interference, a problem may arise where the thickness of the electronic device must be increased.

According to various embodiments, a digitizer having a structure that can avoid interference with nearby structures during the folding and unfolding operations, and an electronic device including the same, can be provided.

According to various embodiments, a digitizer configured not to affect the folding performance of a flexible display, and an electronic device including the same, can be provided.

However, the problems to be solved in the disclosure are not limited to the above-mentioned problems and may be expanded in various ways without departing from the scope of the disclosure.

### [Solution to Problem]

According to various embodiments of the disclosure, an electronic device may include a first housing, a second housing, a hinge device foldably connecting the first housing and the second housing, a flexible display disposed to be supported by the first and second housings and including a folding area, and a digitizer disposed under the flexible display. The digitizer may include a first digitizer part corresponding to at least a portion of the first housing, a second digitizer part corresponding to at least a portion of the second housing, and a connection part connecting the first and second digitizer parts. The connection part may be formed to have an extra length greater than an amount of changes in length of the folding area in a folded state.

According to various embodiments, a digitizer may include a first digitizer part, a second digitizer part, and a connection part connecting the first and second digitizer parts and formed foldably. The connection part may be formed to have an extra length greater than an arrangement distance between the first and second digitizer parts.

### [Advantageous Effects of invention]

The electronic device according to embodiments of the disclosure includes the digitizer integrally formed to include the first digitizer part corresponding to the first housing, the second digitizer part corresponding to the second housing, and the connection part corresponding to the folding area, connecting the first and second digitizer parts, and formed to have an extra length greater than the amount of changes in length by the folding operation. This may not affect the folding performance of the flexible display and not cause interference with nearby structures, thereby helping with slimming of the electronic device.

In addition, various effects explicitly or implicitly appreciated through the disclosure may be provided.

### [Brief Description of Drawings]

In connection with the description of the drawings, the same or similar reference numerals may be used for the same or similar components.
FIGS. 1A and 1B are front and rear views of an electronic device in an unfolded state according to various embodiments of the disclosure.
FIGS. 2A and 2B are front and rear views of an electronic device in a folded state according to various embodiments of the disclosure.
FIG. 3 is an exploded perspective view of a flexible display according to various embodiments of the disclosure.
FIG. 4 is a cross-sectional view of an electronic device taken along line 4-4 of FIG. 1A according to various embodiments of the disclosure.
FIG. 5 is a configuration diagram of a digitizer according to various embodiments of the disclosure.
FIG. 6 is a partial cross-sectional view of a digitizer taken along line 6-6 of FIG. 5 according to various embodiments of the disclosure.
FIG. 7 is a schematic diagram of attaching a digitizer to a flexible display according to various embodiments of the disclosure.
FIG. 8 is a diagram illustrating the arrangement relationship of a digitizer during the folding operation of an electronic device according to various embodiments of the disclosure.
FIGS. 9A to 9E are cross-sectional views of a digitizer according to various embodiments of the disclosure.
FIGS. 10A to 10D are cross-sectional views of a digitizer including a connection member according to various embodiments of the disclosure.
FIG. 11 is a schematic diagram showing digitizers having various connection structures according to various embodiments of the disclosure.

### [Mode for the Invention]

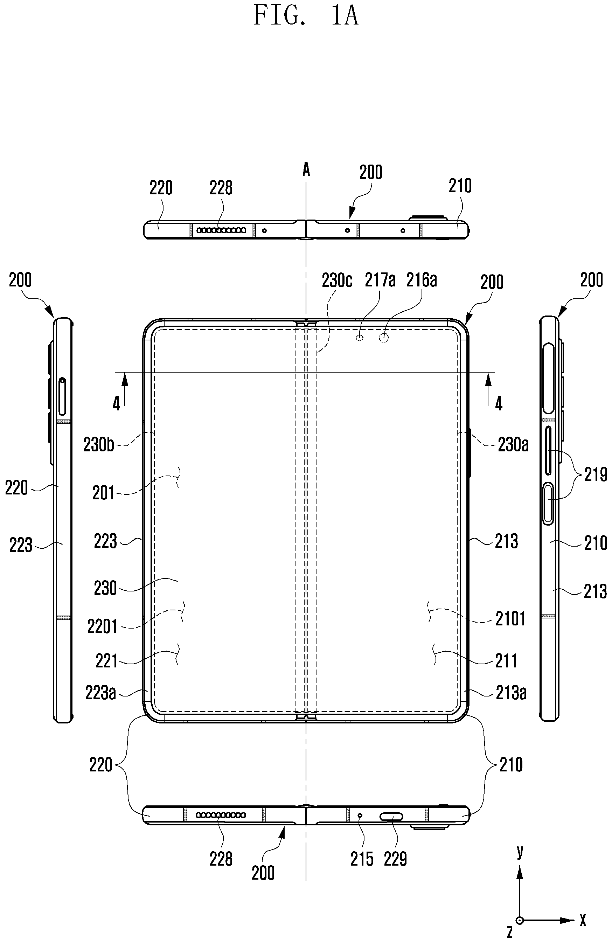

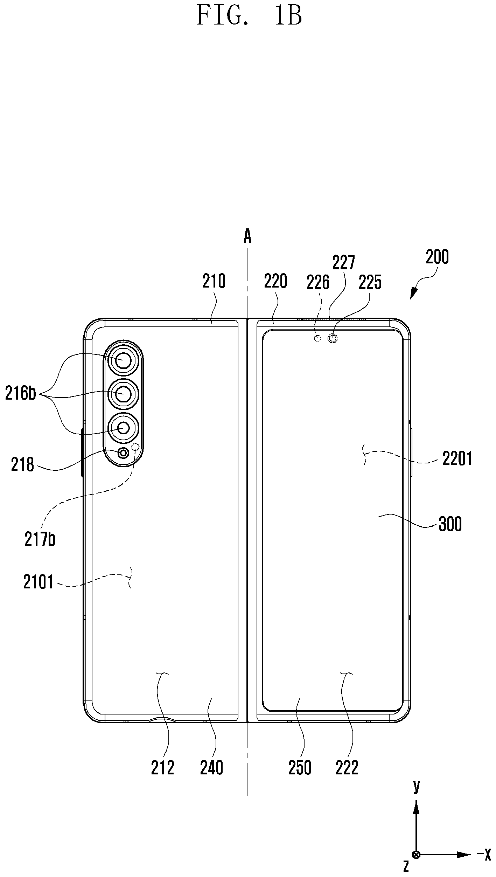

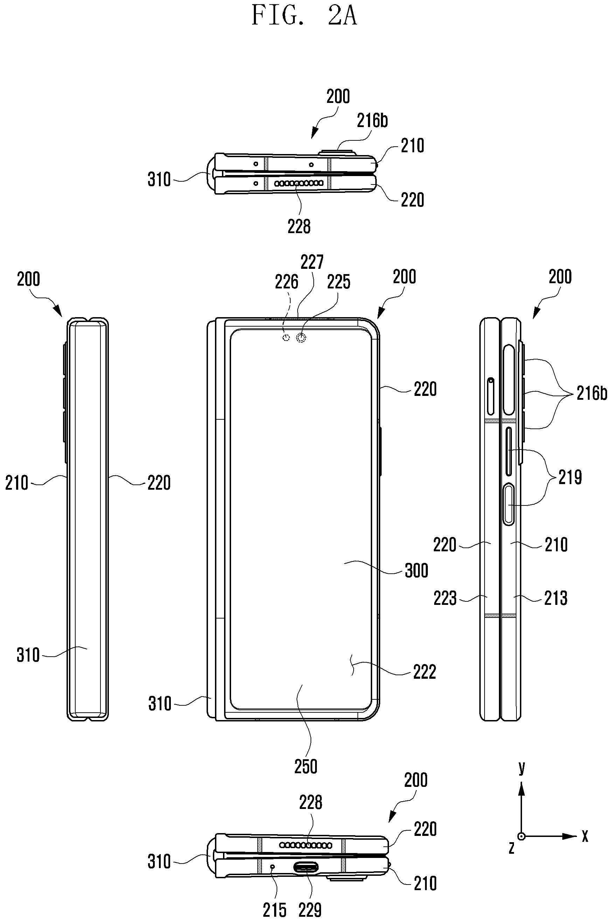

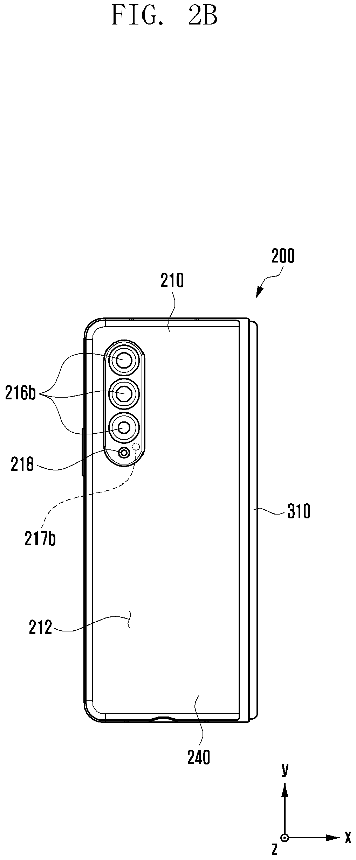

FIGS. 1A and 1B are diagrams illustrating a front view and a rear view, respectively, of an unfolded stateof an electronic device according to various embodiments. FIGS. 2A and 2B are diagrams illustrating a front view and a rear view, respectively, of a folded state of an electronic device according to various embodiments.

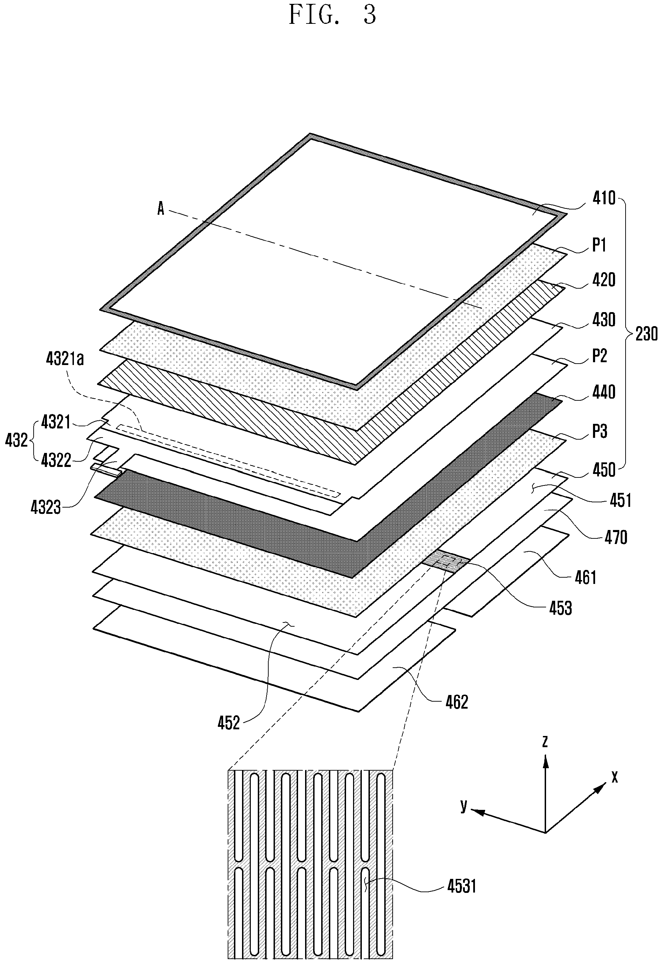

Referring to FIGS. 1A, 1B, 2A and 2B (which may be referred to as FIGS. 1A to 2B), an electronic device 200 may include a pair of housings 210 and 220 (e.g., a foldable housing structure) rotatably coupled to each other with reference to folding axis A through a hinge device (e.g., a hinge device 320 of FIG. 3) (e.g., a hinge module) so as to be folded with respect to each other, a first display 230 (e.g., a flexible display, a foldable display, or a main display) disposed through the pair of housings 210 and 220, and/or a second display 300 (e.g., a sub display) disposed through the second housing 220. According to an embodiment, at least a part of the hinge device (e.g., the hinge device 320 of FIG. 3) may be disposed so as not to be seen from the outside through the first housing 210 and the second housing 220, and may be disposed so as not to be seen from the outside through the hinge housing 310 covering a foldable portion. According to an embodiment, the hinge device 320 may include a hinge module including a gear assembly including multiple gears and multiple hinge cams which are coupled to hinge shafts rotating through the gear assembly and perform a cam interlocking operation, and hinge plates for connecting the hinge model to the first housing 210 and the second housing 220. In the disclosure, a surface in which the first display 230 is disposed may be defined as a front surface of the electronic device 200, and a surface opposite to the front surface may be defined as a rear surface of the electronic device 200. In addition, a surface surrounding a space between the front surface and the rear surface may be defined as a side surface of the electronic device 200.

According to various embodiments, the pair of housings 210 and 220 may include a first housing 210 and a second housing 220 foldably arranged with respect to each other through the hinge device (e.g., the hinge device 320 of FIG. 3). According to an embodiment, the shape and the coupling of the pair of housings 210 and 220 are not limited to those illustrated in FIGS. 1A to 2B, and the pair of housings 210 and 220 may be implemented by a combination and/or coupling of other shapes or components. According to an embodiment, the first housing 210 and the second housing 220 may be arranged on opposite sides with reference to the folding axis A, and may have shapes that are entirely symmetric to each other with respect to the folding axis A. According to an embodiment, the first housing 210 and the second housing 220 may be asymmetrically folded with reference to the folding axis A. According to an embodiment, the angle or the distance between the first housing 210 and the second housing 220 may vary depending on whether the electronic device 200 is in an unfolded state, a folded state, or an intermediate state.

According to various embodiments, the first housing 210 may include, in the unfolded state of the electronic device 200, a first surface 211 connected to the hinge device (e.g., the hinge device 320 of FIG. 3) and disposed to be oriented to the front surface of the electronic device 200, a second surface 212 oriented in a direction opposite to the first surface 211, and/or a first side member 213 surrounding at least a part of a first space between the first surface 211 and the second surface 212. According to an embodiment, the second housing 220 may include, in the unfolded state of the electronic device 200, a third surface 221 connected to the hinge device (e.g., the hinge device 320 of FIG. 3) and disposed to be oriented to the front surface of the electronic device 200, a fourth surface 222 oriented in a direction opposite to the third surface 221, and/or a second side member 223 surrounding at least a part of a second space between the third surface 221 and the fourth surface 222. According to an embodiment, the first surface 211 and the third surface 221 may be oriented in substantially the same direction in the unfolded state, and the first surface 211 and the third surface 221 may at least partially face each other in the folded state. According to an embodiment, the electronic device 200 may include a recess 201 formed to receive the first display 230 through structural coupling of the first housing 210 and the second housing 220. According to an embodiment, the recess 201 may have substantially the same shape as the first display 230. According to an embodiment, the first housing 210 may include a first protection frame 213a (e.g., a first decoration member) which is, when seen from above the first display 230, coupled to the first side member 213, disposed to overlap with an edge of the first display 230, so as to cover the edge of the first display 230 to allow the same not to be seen from the outside. According to an embodiment, the first protection frame 213a may be integrally formed with the first side member 213. According to an embodiment, the second housing 220 may include a second protection frame 223a (e.g., a second decoration member) which is, when seen from above the first display 230, coupled to the second side member 223, disposed to overlap with an edge of the first display 230, so as to cover the edge of the first display 230 to allow the same not to be seen from the outside. According to an embodiment, the second protection frame 223a may be integrally formed with the first side member 223. In an embodiment, the first protection frame 213a and the second protection frame 223a may be omitted.

According to various embodiments, the hinge housing 310 (e.g., a hinge cover) may be disposed between the first housing 210 and the second housing 220, and may be disposed to cover a part (e.g., at least one hinge module) of the hinge device (e.g., the hinge device 320 of FIG. 3) disposed on the hinge housing 310. According to an embodiment, the hinge housing 310 may be hidden or exposed from or to the outside by a part of the first housing 210 and the second housing 220 according to the unfolded state, the folded state, or the intermediate state of the electronic device 200. For example, when the electronic device 200 is in the unfolded state, at least a part of the hinge housing 310 may be covered by the first housing 210 and the second housing 220 and not be substantially exposed. According to an embodiment, when the electronic device 200 is in the folded state, at least a part of the hinge housing 310 may be exposed to the outside between the first housing 210 and the second housing 220. According to an embodiment, in the intermediate state in which the first housing 210 and the second housing 220 are folded with each other by a predetermined angle (folded with a certain angle), the hinge housing 310 may be at least partially exposed to the outside of the electronic device 200 between the first housing 210 and the second housing 220. For example, an area in which the hinge housing 310 is exposed to the outside, may be smaller than that in a case in which the electronic device 200 is completely folded. According to an embodiment, the hinge housing 310 may include a curved surface.

According to various embodiments, when the electronic device 200 is in the unfolded state (e.g., the states shown in FIGS. 1A and 1B), the first housing 210 and the second housing 220 may meet at an about 180-degree angle, and a first area 230a, a second area 230b, and a folding area 230c of the first display 230 may form the same plane and arranged to be oriented in substantially the same direction (e.g., a z-axis direction). In an embodiment, when the electronic device 200 is in the unfolded state, the first housing 210 may rotate by an about 360-degree angle with respect to the second housing 220, and may be outwardly folded (an out-folding scheme) so that the second surface 212 and the fourth surface 222 face each other.

According to various embodiments, when the electronic device 200 is in the folded state (e.g., the states shown in FIGS. 2A and 2B), the first surface 211 of the first housing 210 and the third surface 221 of the second housing 220 may be arranged to face each other. In this case, the first area 230a and the second area 230b of the first display 230 may form a narrow angle (e.g., a range between 0 degrees to about 10 degrees) through the folding area 230c, and may be arranged to face each other. According to an embodiment, at least a part of the folding area 230c may be deformed into a curved shape having a predetermined curvature. According to an embodiment, when the electronic device 200 is in the intermediate state, the first housing 210 and the second housing 220 may be arranged at a predetermined angle (a certain angle). In this case, the first area 230a and the second area 230b of the first display 230 may form an angle that is greater than that in the folded state and smaller than that in the unfolded state, and the curvature of the folding area 230c may be lower than that in the folded state, and may be higher than that in the unfolded state. In an embodiment, the first housing 210 and the second housing 220 may form an angle which allows stopping at a designated folding angle between the folded state and the unfolded state (a free stop function), through the hinge device (e.g., the hinge device 320 of FIG. 3). In an embodiment, the first housing 210 and the second housing 220 may continuously operate while being pressed in an unfolding direction or a folding direction with reference to a designated inflection angle, through the hinge device (e.g., the hinge device 320 of FIG. 3).

According to various embodiments, the electronic device 200 may include at least one of at least one display 230 and 300 disposed on the first housing 210 and/or the second housing 220, an input device 215, sound output devices 227 and 228, sensor modules 217a, 217b, and 226, camera modules 216a, 216b, and 225, a key input device 219, an indicator (not shown), or a connector port 229. In an embodiment, the electronic device 200 may omit at least one of the elements, or may additionally include at least one another element.

According to various embodiments, the at least one display 230 and 300 may include a first display 230 (e.g., a flexible display) disposed to be supported by the third surface 221 of the second housing 220 from the first surface 211 of the first housing 210 through the hinge device (e.g., the hinge device 320 of FIG. 3), and a second display 300 disposed to be at least partially seen from the outside through the fourth surface 222 in a space in the second housing 220. In an embodiment, the second display 300 may be disposed to be seen from the outside through the second surface 212 in a space in the first housing 210. According to an embodiment, the first display 230 may be mainly used in the unfolded state of the electronic device 200, and the second display 300 may be mainly used in the folded state of the electronic device 200. According to an embodiment, the electronic device 200 may control, in the intermediate state, the first display 230 and/or the second display 300 to be used, based on a folding angle between the first housing 210 and the second housing 220.

According to various embodiments, the first display 230 may be disposed in a receiving space formed by the pair of housings 210 and 220. For example, the first display 200 may be disposed in a recess 201 formed by the pair of housings 210 and 220, and may be disposed to occupy substantially the most of the front surface of the electronic device 200in the unfolded state. According to an embodiment, the first display 230 may include a flexible display having at least one area which can be deformed into a plane or a curved surface. According to an embodiment, the first display 230 may include the first area 230a facing the first housing 210 and the second area 230b facing the second housing 220. According to an embodiment, the first display 230 may include the folding area 230c including a part of the first area 230a and a part of the second area 230b with respect to the folding axis A. According to an embodiment, at least a part of the folding area 230c may include an area corresponding to the hinge device (e.g., the hinge device 320 of FIG. 3). According to an embodiment, a division of an area of the first display 230 merely corresponds to an example physical division by the pair of housings 210 and 220 and the hinge device (e.g., the hinge device 320 of FIG. 3), and the first display 230 may be substantially displayed as one seamless full screen through the pair of the housings 210 and 220 and the hinge device (e.g., the hinge device 320 of FIG. 3). According to an embodiment, the first area 230a and the second area 230b may have shapes that are entirely symmetric or partially asymmetric to each other with respect to the folding area 230c.

According to various embodiments, the electronic device 200 may include a first rear cover 240 disposed on the second surface 212 of the first housing 210 and a second rear cover 250 disposed on the fourth surface 222 of the second housing 220. In an embodiment, at least a part of the first rear cover 240 may be integrally formed with the first side member 213. In an embodiment, at least a part of the second rear cover 250 may be integrally formed with the second side member 223. According to an embodiment, at least one of the first rear cover 240 and the second rear cover 250 may be substantially formed of a transparent plate (e.g., a polymer plate or glass plate including various coding layers) or an opaque plate. According to an embodiment, the first rear cover 240 may be formed of, for example, an opaque plate such as coded or colored glass, ceramic, polymer, metal (e.g., aluminum, stainless steel (STS), or magnesium), or a combination of at least two of the materials above. According to an embodiment, the second rear cover 250 may be substantially formed of, for example, a transparent plate such as glass or polymer. Accordingly, the second display 300 may be disposed to be seen from the outside through the second rear cover 250 in a space in the second housing 220.

According to various embodiments, the input device 215 may include a microphone. In an embodiment, the input device 215 may include multiple microphones arranged to detect the direction of sound. According to an embodiment, the sound output devices 227 and 228 may include speakers. According to an embodiment, the sound output devices 227 and 228 may include a call receiver 227 disposed through the fourth surface 222 of the second housing 220 and an external speaker 228 disposed through at least a part of the second side member 223 of the second housing 220. In an embodiment, the input device 215, the sound output devices 227 and 228, and the connector 229 may be disposed in spaces of the first housing 210 and/or the second housing 220, and may be exposed to an external environment through at least one hole formed through the first housing 210 and/or the second housing 220. In an embodiment, holes formed through the first housing 210 and/or the second housing 220 may be commonly used for the input device 215 and the sound output devices 227 and 228. In an embodiment, the sound output devices 227 and 228 may include a speaker (e.g., a piezo speaker) operating without including a hole formed through the first housing 210 and/or the second housing 220.

According to various embodiments, the camera modules 216a, 216b, and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220. According to an embodiment, the electronic device 200 may include a flash 218 disposed around the second camera module 216b. According to an embodiment, the flash 218 may include, for example, a light-emitting diode or a xenon lamp. According to an embodiment, the camera modules 216a, 216b, and 225 may include one or multiple lenses, an image sensor, and/or an image signal processor. In an embodiment, at least one of the camera modules 216a, 216b, and 225 may include two or more lenses (e.g., wide-angle and telephoto lenses) and image sensors, and may be arranged together on one surface of the first housing 210 and/or the second housing 220.

According to various embodiments, the sensor modules 217a, 217b, and 226 may generate a data value or an electrical signal corresponding to an internal operational state or an external environmental state of the electronic device 200.According to an embodiment, the sensor modules 217a, 217b, and 226 may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220. In an embodiment, the sensor modules 217a, 217b, and 226 may include at least one of a gesture sensor, a grip sensor, a color sensor, an infrared (IR) sensor, an illuminance sensor, an ultrasonic sensor, an iris recognition sensor, or a distance detection sensor (e.g., a time of flight (TOF) sensor or a light detection and ranging (LiDAR)).

According to various embodiments, the electronic device 200 may further include an unillustrated sensor module, for example, at least one of an atmospheric sensor, a magnetic sensor, a biometric sensor, a temperature sensor, a humidity sensor, or a fingerprint recognition sensor. In an embodiment, the fingerprint recognition sensor may be disposed through at least one of the first side member 213 of the first housing 210 and/or the second side member 223 of the second housing 220.

According to various embodiments, the key input device 219 may be disposed to be exposed to the outside through the first side member 213 of the first housing 210. In an embodiment, the key input device 219 may be disposed to be exposed to the outside through the second side member 223 of the second housing 220. In an embodiment, the electronic device 200 may not include some or all of the key input device 219, and the unincluded key input device 219 may be implemented in another shape such as a soft key on the least one display 230 and 300. In an embodiment, the key input device 219 may be implemented using a pressure sensor included in the at least one display 230 and 300.

According to various embodiments, the connector port 229 may include a connector (e.g., a USB connector or an IF module (an interface connector port module)) for transmitting or receiving data and/or power to and/or from an external electronic device. In an embodiment, the connector port 229 may perform a function of transmitting or receiving an audio signal to or from the external electronic device together, or may further include a separate connector port (e.g., an ear jack hole) for performing a function of transmitting or receiving an audio signal to or from the external electronic device.

According to various embodiments, at least one camera modules 216a and 225 of the camera modules 216a, 216b, and 225, at least one sensor module 217a and 226 of the sensor modules 217a, 217b, and 226, and/or an indicator may be arranged to be exposed through the at least one display 230 and 300. For example, the at least one camera modules 216a and 225, the at least one sensor module 217a and 226, and/or the indicator may be arranged under an activated area (a display area) of the at least one display 230 and 300 in a space in the at least one housing 210 and 220, and may be arranged to come into contact with an external environment through a transparent area or an opening that is perforated to a cover member (e.g., a window layer (not shown) of the first display 230 and/or the second rear cover 250). According to an embodiment, an area in which the at least one display 230 and 300 and the at least one camera module 216a and 225 face each other may be formed as a transmission area having a predetermined transmission ratio, as a part of an area in which a content is displayed. According to an embodiment, the transmission area may be formed to have a transmission ratio in the range of about 5% to about 20%. The transmission area may include an area overlapping with an effective area (e.g., an angle of view area) of the at least one camera module 216a and 225, wherein an image is formed on the image sensor in the effective area, and light for generating an image passes through the effective area. For example, the transmission area of the display 230 and 300 may include an area in which the density of a pixel is lower than that in a surrounding area. For example, the transmission area may be replaced with an opening. For example, the at least one camera module 216a and 225 may include an under-display camera (UDC) or an under-panel camera (UPC). In an embodiment, some camera modules or sensor modules 271a and 226 may be arranged to perform functions thereof without being visually exposed through the display. For example, an area facing the sensor module 217a and 226 and/or the camera module 216a and 225 arranged under the display 230 and 300 (e.g., a display panel) corresponds to an under-display camera (UDC) structure, and a perforated opening is not necessarily required.

FIG. 3 is an exploded perspective view of a flexible display according to various embodiments of the disclosure.

The flexible display 230 according to embodiments of the disclosure may include an unbreakable (UB) type OLED display (e.g., a curved display). However, the flexible display 230is not limited to the above display and may include a flat type display of an OCTA (on cell touch AMOLED (active matrix organic light-emitting diode)) scheme.

With reference to FIG. 3, the flexible display 230 may include a window layer 410 and also include a polarizer (POL) 420 (e.g., a polarizing film), a display panel 430, a polymer layer 440, a support plate 450, a digitizer 470, and reinforcing plates 461 and 462, which are sequentially disposed on the rear surface of the window layer 410. In some embodiments, the digitizer 470 may be disposed between the polymer layer 440 and the support plate 450.

According to various embodiments, the window layer 410 may include a glass layer. According to an embodiment, the window layer 410 may include ultra-thin glass (UTG). In some embodiments, the window layer 410 may include a polymer. In this case, the window layer 410 may include polyethylene terephthalate (PET) or polyimide (PI). In some embodiments, the window layer 410 may be arranged in multiple layers to include a glass layer and a polymer.

According to various embodiments, the window layer 410, the polarizer 420, the display panel 430, the polymer layer 440, the support plate 450, and the digitizer 470 may be disposed to cross at least a part of a first surface (e.g., the first surface 211 in FIG. 1A) of a first housing (e.g., the first housing 210 in FIG. 1A) and a third surface (e.g., the third surface 221 in FIG. 1A) of a second housing (e.g., the second housing 220 in FIG. 1A). According to an embodiment, the reinforcing plates 461 and 462 may include a first reinforcing plate 461 corresponding to the first housing (e.g., the first housing 210 in FIG. 1A) and a second reinforcing plate 462 corresponding to the second housing (e.g., the second housing 220 in FIG. 1A). According to an embodiment, the reinforcing plates 461 and 462 may provide rigidity for the flexible display 230 and may be used as a ground for preventing malfunction of the flexible display 230. According to an embodiment, the reinforcing plates 461 and 462 may be formed of a metal material. According to an embodiment, the reinforcing plates 461 and 462 may be formed of steel use stainless (SUS) (e.g., stainless steel (STS)) or aluminum (Al). According to an embodiment, the window layer 410, the polarizer 420, the display panel 430, the polymer layer 440, the support plate 450, the digitizer 470, and the reinforcing plates 461 and 462 may be attached to each other through adhesives P1, P2, and P3. For example, the adhesives P1, P2, and P3 may include at least one of an optical clear adhesive (OCA), a pressure sensitive adhesive (PSA), a heat-reactive adhesive, a general adhesive, or a double-sided tape.

According to various embodiments, the display panel 430 may have a plurality of pixels and a wiring structure (e.g., an electrode pattern). According to an embodiment, the polarizer 420 may selectively pass light generated from a light source of the display panel 430 and vibrating in a certain direction. According to an embodiment, the display panel 430 and the polarizer 420 may be integrally formed. According to an embodiment, the flexible display 230 may include a touch panel (not shown).

According to various embodiments, the polymer layer 440 may be disposed under the display panel 430 to provide a dark background for ensuring the visibility of the display panel 430, and may be formed of a buffering material for a buffering action. In some embodiments, to waterproof the flexible display 230, the polymer layer 440 may be removed or disposed under the support plate 450.

According to various embodiments, the support plate 450 may provide rigidity and bending characteristics to the flexible display 230. For example, the support plate 450 may be formed of a non-metallic thin plate-type material such as fiber reinforced plastic (FRP) (e.g., carbon fiber reinforced plastic (CFRP) or glass fiber reinforced plastic (GFRP)) having rigid characteristics for supporting the display panel 430. According to an embodiment, the support plate 450 may have a first flat portion 451 corresponding to the first housing (e.g., the first housing 210 in FIG. 1A), a second flat portion 452 corresponding to the second housing (e.g., the second housing 220 in FIG. 1A), and a bending portion 453 (or a flexible portion) connecting the first flat portion 451 and the second flat portion 452. According to an embodiment, the bending portion 453 may have a plurality of openings 4531 arranged at certain intervals. According to an embodiment, the bending characteristics of the bending portion 453 may be determined through at least one of the size, shape, or arrangement density of at least some of the plurality of openings 4531. In some embodiments, the support plate 450 may be formed of a metal material such as SUS, Cu, Al, or metal clad (e.g., a laminated member in which SUS and Al are alternately disposed). In this case, the support plate 450 may have a plurality of openings formed throughout the entire area thereof so that a detection operation of the digitizer 470 disposed thereunder is induced. According to an embodiment, the support plate 450 may help to reinforce the rigidity of the electronic device (e.g., the electronic device 200 in FIG. 1A) and be used to shield ambient noise and dissipate heat from surrounding heat-generating components.

According to various embodiments, the display 230 may include the digitizer 470 as a detecting member that is disposed under the support plate 450 and receives an input of an electronic pen (e.g., a stylus). According to an embodiment, the digitizer 470 may have a plurality of conductive patterns (e.g., a coil pattern) disposed on a dielectric substrate (e.g., a dielectric film or a dielectric sheet) to detect a resonant frequency of an electromagnetic induction scheme applied from the electronic pen.

According to various embodiments, the flexible display 230 may include at least one functional member (not shown) disposed between the polymer layer 440 and the support plate 450 or under the support plate 450. According to an embodiment, the functional member may include a graphite sheet for heat dissipation, an added display, a force touch FPCB, a fingerprint sensor FPCB, an antenna radiator for communication, or a conductive/non-conductive tape. According to an embodiment, when bending is impossible, the functional member may be individually disposed in the first housing (e.g., the first housing 210 in FIG. 1A) and the second housing (e.g., the second housing 220 in FIG. 1A). According to an embodiment, when bending is possible, the functional member may be disposed from the first housing (e.g., the first housing 210 in FIG. 1A) to at least a part of the second housing (e.g., the second housing 220 in FIG. 1A) through the hinge device.

According to various embodiments, the flexible display 230 may include a bending portion 432 disposed to be bendable from the display panel 430 to at least a part of the rear surface of the flexible display 230. According to an embodiment, the bending portion 432 may include an extension portion 4321 extending from the display panel 430 and having a control circuit 4321a, and a flexible substrate 4322 electrically connected to the extension portion 4321 and having a plurality of electric elements. According to an embodiment, the control circuit 4321a may include a display driver IC (DDI) or a touch display driver IC (TDDI) mounted on the extension portion 4321 having an electrical wiring structure. According to an embodiment, the bending portion 432 may have a chip on panel or chip on plastic (COP) structure in which the control circuit 4321a is directly disposed on the extension portion 4321. In another embodiment, the bending portion 432 may have a chip on film (COF) structure in which the control circuit 4321a is mounted on a separate connection film (not shown) connecting the extension portion 4321 and the flexible substrate 4322. According to an embodiment, the flexible display 230 may include an FPCB connector 4323 extending from the flexible substrate 4322 and electrically connected to a substrate of the electronic device (e.g., the electronic device 200 in FIG. 3). According to an embodiment, the plurality of electric elements may include a touch IC, a flash memory for a display, a diode for preventing ESD, a pressure sensor, a fingerprint sensor, or a passive element such as a decap.

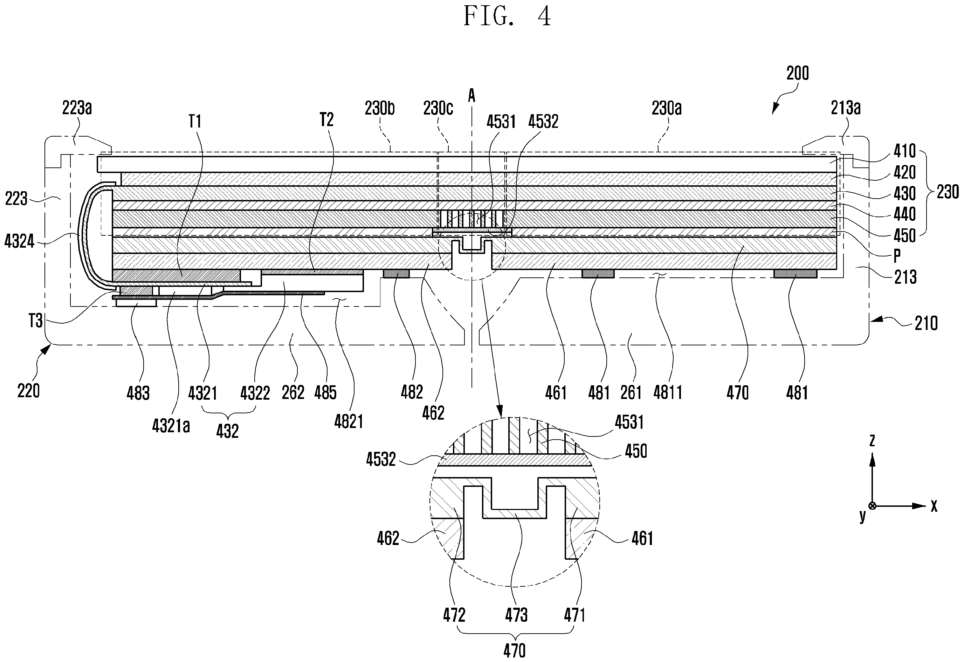

According to an embodiment of the disclosure, the digitizer 470 may be integrally formed to include a first digitizer part (e.g., a first digitizer part 471 in FIG. 4) corresponding to the first area (e.g., the first area 230a in FIG. 1A) of the flexible display 230, a second digitizer part (e.g., a second digitizer part 472 in FIG. 4) corresponding to the second area (e.g., the second area 230b in FIG. 1A) of the flexible display 230, and a connection part (e.g., a connection part 473 in FIG. 4) that corresponds to at least a part of the folding area (e.g., the folding area 230c in FIG. 1A) of the flexible display 230 and connects the first and second digitizer parts 471 and 472. For example, the connection part 473 is formed to have a thickness smaller than those of the first and second digitizer parts 471 and 472 and to have an extra length equal to or greater than a change in length of the folding area 230c. This may not affect the folding performance of the flexible display 230 and not cause interference with nearby structures (e.g., the first housing 210 and/or the second housing 220), thereby helping with slimming of the electronic device 200.

FIG. 4 is a cross-sectional view of an electronic device taken along line 4-4 of FIG. 1A according to various embodiments of the disclosure.

With reference to FIG. 4, the electronic device 200 may include the first housing 210 having the first lateral member 213, the second housing 220 having the second lateral member 223, and the flexible display 230 arranged to be supported by the first and second housings 210 and 220. According to an embodiment, the flexible display 230 may be disposed to be supported by a first support member 261 extending from the first lateral member 213 and a second support member 262 extending from the second lateral member 223. According to an embodiment, the first housing 210 may include a first protective frame 213a (e.g., a first decoration member) that is combined with the first lateral member 213, and is arranged to overlap the edge of the first display 230 when the first display 230 is viewed from above, and thereby covers the edge of the first display 230 to be invisible from the outside. According to an embodiment, the first protective frame 213a may be formed integrally with the first lateral member 213. According to an embodiment, the second housing 220 may include a second protective frame 223a (e.g., a second decoration member) that is combined with the second lateral member 223, and is arranged to overlap the edge of the first display 230 when the first display 230 is viewed from above, and thereby covers the edge of the first display 230 to be invisible from the outside. According to an embodiment, the second protective frame 223a may be formed integrally with the second lateral member 223. In some embodiments, the first protective frame 213a and the second protective frame 223a may be omitted. According to an embodiment, the flexible display 230 may be arranged to maintain, at least in part, a certain gap from the lateral members 213 and 223 and the protective frame 213a and 223a to accommodate a slip phenomenon that may occur during the folding and unfolding operations of the electronic device 200.

According to various embodiments, the flexible display 230 may include the window layer 410 and also include the polarizer 420, the display panel 430, the polymer layer 440, the support plate 450, the digitizer 470, and the pair of reinforcing plates 461 and 462, which are sequentially disposed under the window layer 410. According to an embodiment, the support plate 450 may have the plurality of openings 4531 formed in the folding area 230c to provide flexibility to the flexible display 230. According to an embodiment, the flexible display 230 may further include a blocking member 4532 disposed to block the plurality of openings 4531 between the adhesive layers P that attach the digitizer 470 to the support plate 450. According to an embodiment, the blocking member may include thermoplastic polyurethane (TPU) attached to the support plate. In some embodiments, the electronic device 200 may include a metal sheet layer disposed between the digitizer 470 and the first reinforcing plate 461 and between the digitizer 470 and the second reinforcing plate 462, thereby providing directionality to the electromagnetic induction signal generated from the digitizer 470 and preventing eddy current.

According to various embodiments, the flexible display 230 may include the bending portion 432 that extends outward from the display panel 430 and is arranged to be foldable onto the rear surface of the flexible display 230 (e.g., the surface of the second reinforcing plate 462). According to an embodiment, the flexible display 230 may further include a bending protection layer (BPL) 4324 that is laminated on the outer surface of the bending portion 432 and protects at least a part of the bending portion 432. According to an embodiment, the bending portion 432 may include the extension portion 4321 extending from the display panel 430 and having the control circuit 4321a, and the flexible substrate 4322 connected to the extension portion 4321 and having a plurality of electric elements. According to an embodiment, the bending portion 432 may be bent onto the rear surface of the flexible display 230 and then attached to the second reinforcing plate 462. According to an embodiment, the ground of the flexible substrate 4322 is electrically connected to the second reinforcing plate 462, thereby helping to prevent malfunction (e.g., flicker phenomenon) of the flexible display 230. According to an embodiment, the extension portion 4321 of the bending portion 432 may be attached to the second reinforcing plate 462 on the rear surface of the flexible display 230 through a first adhesive member T1. According to an embodiment, the flexible substrate 4322 may be attached to the second reinforcing plate 462 through a second adhesive member T2. The first adhesive member T1 is, for example, a tape member with a certain thickness, and is used to maintain a bent state of the bending portion 432 and also to serve as a spacer with a thickness compensating for a height difference between the extension portion 4321 and the flexible substrate 4322. According to an embodiment, the first adhesive member T1 and/or the second adhesive member T2 may be made of a waterproof member (e.g., a waterproof tape) because of being exposed to the outside at least in part. According to an embodiment, the first adhesive member T1 may have PET, PI, or a material in which close-type foam and PET are combined. According to an embodiment, the second adhesive member T2 may have a conductive tape for electrically connecting the ground of the flexible substrate 4322 to the second reinforcing plate 462. In some embodiments, the second adhesive member T2 may also have a compensation function to compensate for the height difference between the extension portion 4321 and the flexible substrate 4322.

According to various embodiments, the control circuit 4321a disposed on the extension portion 4321 may be protected through a cover member 485 attached to cover at least a part of the flexible substrate 4322 and at least a part of the extension portion 4321. According to an embodiment, the control circuit 4321a may be sealed by being disposed between a third adhesive member T3, disposed between the cover member 485 and the extension portion 4321, and the flexible substrate 4322. In some embodiments, the third adhesive member T3 may be omitted when the size of the control circuit 4321a is small and the distance between the control circuit 4321a and the bending protection layer 4324 is long. In this case, a part of the cover member 485 may be bent and then directly attached to the extension portion 4321. According to an embodiment, the third adhesive member T3 may be made of a waterproof member (e.g., waterproof tape). According to an embodiment, the third adhesive member T3 may be disposed between the bending protection layer 4324 and the control circuit 4321a. According to an embodiment, at least a part of the cover member 485 comes into direct contact with external moisture and/or foreign substances, and therefore may itself be formed of a material having a waterproof structure.

According to various embodiments, the electronic device 200 may include a first waterproof member 481 disposed between the first reinforcing plate 461 and the first support member 261. According to an embodiment, the electronic device 200 may include a second waterproof member 482 disposed between the second reinforcing plate 462 and the second support member 262, and a third waterproof member 483 disposed between the cover member 485 and the second support member 262. According to an embodiment, the electronic device 200 may have waterproof spaces 4811 and 4821 provided through the first waterproof member 481, the second waterproof member 482, and the third waterproof member 483 to protect at least one electronic component disposed between the flexible display 230 and the housings 210 and 220 from external foreign substances and/or moisture.

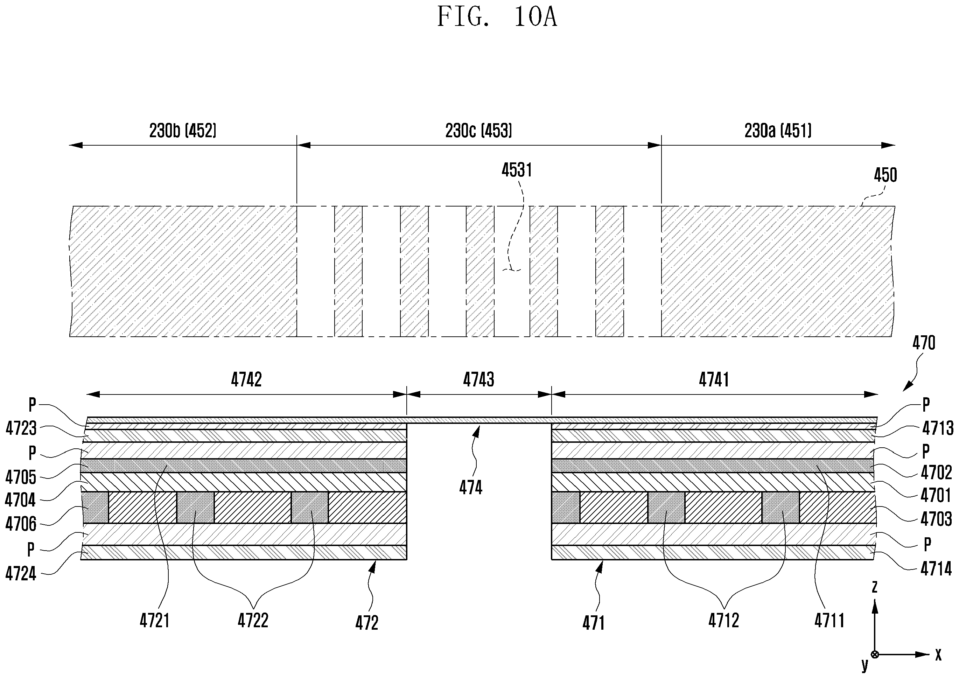

According to various embodiments, the digitizer 470 may include the first digitizer part 471 disposed to correspond to the first area 230a of the flexible display 230 and at least a part of the first housing 210, the second digitizer part 472 disposed to correspond to the second area 230b of the flexible display 230 and at least a part of the second housing 220, and the connection part 473 that connects the first and second digitizer parts 471 and 472 and is disposed to correspond to at least a part of the folding area 230c of the flexible display 230. According to an embodiment, the connection part 473 may be formed using some layers of the digitizer 470. In some embodiments, the connection part 473 may be formed through a separate connection member (e.g., a connection member 474 in FIG. 10A) laminated on the digitizer 470. According to an embodiment, the connection part 473 may be formed to have an extra length that is greater than an actual arrangement distance from the first digitizer part 471 to the second digitizer part 472. This extra length may be determined depending on the amount of change in length that increases when the flexible display 230 is folded. For example, the extra length of the connection part 473 may be formed to be substantially equal to or greater than a change in length of the folding area 230c, thereby preventing deformation of the digitizer 470 during the folding operation, preventing a problem caused by the separate digitizer arrangement structure in which a part of the digitizer falls into a hinge space (e.g., the inner space of the hinge housing 310 of FIG. 2A), and not affecting the folding characteristics of the flexible display 230. According to an embodiment, the electronic device 200 includes the digitizer 470 integrally formed through the connection part 473 and thereby avoiding interference with nearby structures (e.g., housings) during the folding operation, so it can help with slimming.

Table 1 below shows the extra length of the connection part 473 determined according to the amount of change in length of the folding area 230c having a specified curvature when transitioning from the unfolded state to the folded state. For example, if the amount of change in length of the folding area 230c with a curvature of 1.4R is 0.942 mm, the extra length of the connection part 473 may be determined to be about 1 mm or more. For example, if the amount of change in length of the folding area 230c with a curvature of 2.3R is 0.96 mm, the extra length of the connection part 473 may also be determined to be about 1 mm or more.

**[Table 1]**

| Curvature of folding area | Extra length of connection part | Amount of change in length of folding area |
|---|---|---|
| 1.4R | >1mm | 0.942mm |
| 2.3R | >1mm | 0.96mm |

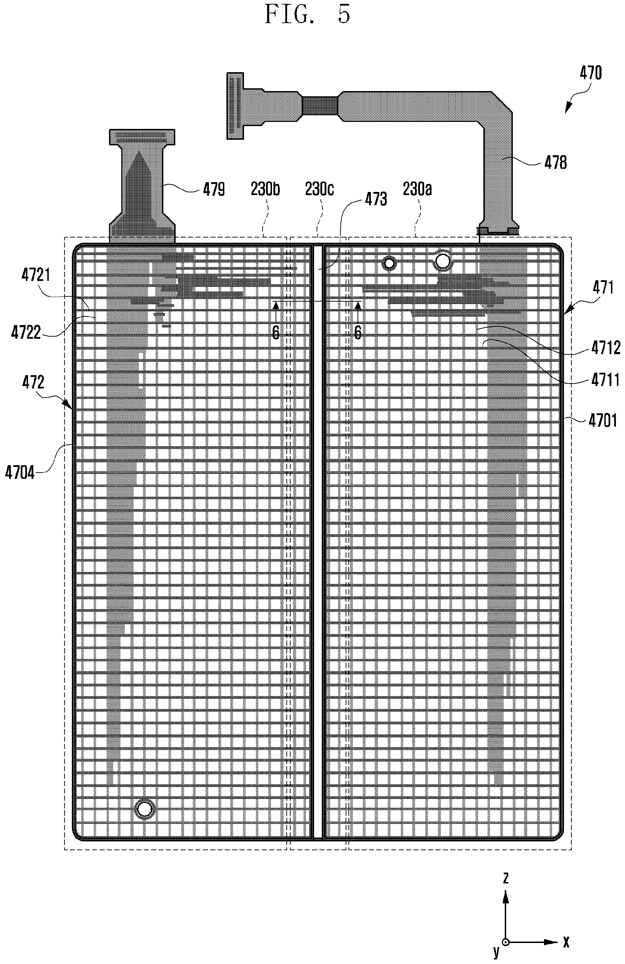

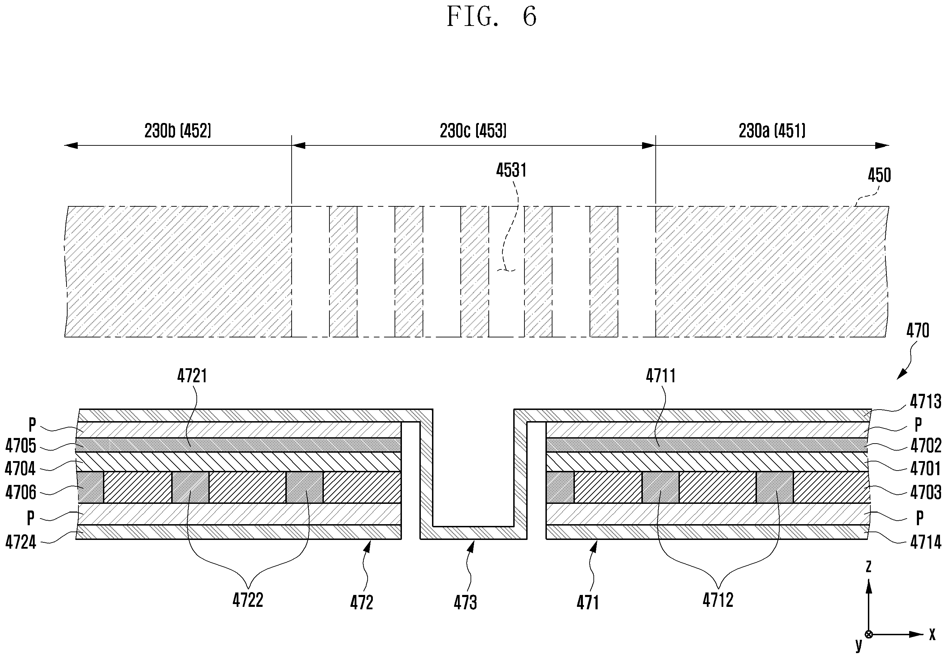

FIG. 5 is a configuration diagram of a digitizer according to various embodiments of the disclosure. FIG. 6 is a partial cross-sectional view of a digitizer taken along line 6-6 of FIG. 5 according to various embodiments of the disclosure.

With reference to FIGS. 5 and 6, the digitizer 470 may include the first digitizer part 471 disposed to correspond to at least a part of the first area 230a of the flexible display 230, the second digitizer part 472 disposed to correspond to at least a part of the second area 230b of the flexible display 230, and the connection part 473 that connects the first and second digitizer parts 471 and 472 and is disposed to correspond to at least a part of the folding area 230c of the flexible display 230. According to an embodiment, the digitizer 470 may be integrally formed through the connection part 473 connecting the first and second digitizer parts 471 and 472.

According to various embodiments, the first digitizer part 471 may include a first dielectric layer 4701, a plurality of first conductive patterns 4711 disposed in a first layer 4702 stacked on the top of the first dielectric layer 4701, and a plurality of second conductive patterns 4712 disposed in a second layer 4703 stacked on the bottom of the first dielectric layer 4701. According to an embodiment, the first digitizer part 471 may include a first coverlay 4713 stacked on the first layer 4702 and a second coverlay 4714 stacked on the second layer 4703. The first coverlay 4713 and the second coverlay 4714 may be stacked on the first layer 4702 and the second layer 4703, respectively, through an adhesive member P. According to an embodiment, the first layer 4702 and the second layer 4703 may also be formed of a dielectric. According to an embodiment, the plurality of first conductive patterns 4711 may be arranged to have a length along a first direction (e.g., x-axis direction) and be spaced apart at certain intervals, and the plurality of second conductive patterns 4712 may be arranged to have a length along a second direction (e.g., y-axis direction) perpendicular to the first direction (e.g., x-axis direction).

According to various embodiments, the second digitizer part 472 may include a second dielectric layer 4704, a plurality of third conductive patterns 4721 disposed in a third layer 4705 stacked on the top of the second dielectric layer 4704, and a plurality of fourth conductive patterns 4722 disposed in a fourth layer 4706 stacked on the bottom of the second dielectric layer 4702. According to an embodiment, the second digitizer part 472 may include the first coverlay 4713 stacked on the third layer 4705 and extending from the first digitizer part 471 to function as a third coverlay, and a fourth coverlay 4724 stacked on the fourth layer 4706. The first coverlay 4713 and the fourth coverlay 4724 may be stacked on the third layer 4705 and the fourth layer 4706, respectively, through the adhesive member P. According to an embodiment, the adhesive member P may include at least one of optical clear adhesive (OCA), pressure sensitive adhesive (PSA), heat-reactive adhesive, general adhesive, or double-sided tape. According to an embodiment, the third layer 4705 and the fourth layer 4706 may also be formed of a dielectric. According to an embodiment, the plurality of third conductive patterns 4721 may be arranged to have a length along the first direction (e.g., x-axis direction) and be spaced apart at certain intervals, and the plurality of fourth conductive patterns 4722 may be arranged to have a length along the second direction (e.g., y-axis direction) perpendicular to the first direction (e.g., x-axis direction). According to an embodiment, at least one of the first dielectric layer 4701, the second dielectric layer 4704, the first layer 4702, the second layer 4703, the third layer 4705, the fourth layer 4706, or the coverlays 4713, 4714, and 4724 may be formed of polyimide (PI) material. According to an embodiment, the second dielectric layer 4704, the third layer 4705, the fourth layer 4706, the fourth coverlay 4724, the plurality of third conductive patterns 4721, and the plurality of fourth conductive patterns 4722 of the second digitizer part 472 may be formed together with corresponding components when the first digitizer part 471 is formed. In some embodiments, the second dielectric layer 4704, the third layer 4705, the fourth layer 4706, the fourth coverlay 4724, the plurality of third conductive patterns 4721, and the plurality of fourth conductive patterns 4722 of the second digitizer part 472 may be formed separately from the components of the first digitizer part 471.

According to various embodiments, the digitizer 470 may include a first FPCB connection portion 478 connected to the plurality of first conductive patterns 4711 and the plurality of second conductive patterns 4712 and extending outward from the first digitizer part 471. According to an embodiment, the digitizer 470 may include a second FPCB connection portion 479 connected to the plurality of third conductive patterns 4721 and the plurality of fourth conductive patterns 4722 and extending outward from the second digitizer part 472. For example, when the plurality of conductive patterns 4711, 4712, 4721, and 4722 are concentrated in the FPCB connection portions 478 and 479, flexibility may be reduced near the FPCB connection portions 478 and 479.

In the digitizer 470 according to embodiments of the disclosure, separate FPCB connections 478 and 479 are drawn out from the first digitizer part 471 and the second digitizer part 472, respectively. Accordingly, crowding of the conductive patterns 4711, 4712, 4721, and 4722 in a region corresponding to the folding area 230c of the flexible display 230 can be reduced. This structure can help improve the flexibility of the digitizer 470 in the region corresponding to the folding area 230c of the flexible display 230.

According to various embodiments, the connection part 473 may be formed in a manner that the first coverlay 4713 stacked on the first layer 4702 of the first digitizer part 471 extends to and is stacked on the third layer 4705 of the second digitizer part 472. According to an embodiment, the connection part 473 may be formed to have an extra length greater than a straight line distance from the first digitizer part 471 to the second digitizer part 472. This extra length may be determined by the amount of change in length that increases when the flexible display 230 is folded. For example, the extra length of the connection part 473 formed to be substantially equal to or greater than the change in length of the folding area 230c can prevent deformation of the digitizer 470 due to the folding operation and also not affect the folding characteristics of the flexible display 230.

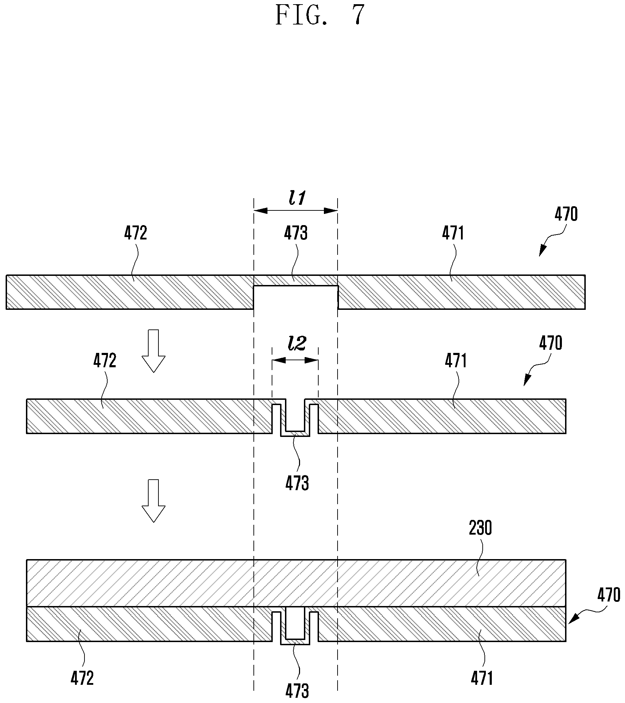

FIG. 7 is a schematic diagram of attaching a digitizer to a flexible display according to various embodiments of the disclosure.

With reference to FIG. 7, the digitizer 470 may be provided to include the first digitizer part 471, the second digitizer part 472, and the connection part 473 connecting the first and second digitizer parts 471 and 472. According to an embodiment, as described above, the connection part 473 may be arranged in a manner that the first coverlay (e.g., the first coverlay 4713 in FIG. 6) of the first digitizer part 471 is extended to the second digitizer part 472. In this case, through folding processing, the connection part 473 may be formed to have an extra length greater than an arrangement distance 12 from the first digitizer part 471 to the second digitizer part 472. According to an embodiment, the extra length is the length excluding the arrangement distance (l2) from the total length (l1) of the connection part 473, and may be equal to or greater than the amount of change in length (e.g., increasing length when transitioning from the unfolded state to the folded state) of the folding area (e.g., the folding area 230c in FIG. 6) of the flexible display 230. For example, the extra length may be determined greater in the range of about 120% to 150% of the change in length of the folding area 230c of the flexible display 230. In some embodiments, the extra length may be determined to have a length of about 130% of the change in length of the folding area 230c of the flexible display 230. According to an embodiment, the connection part 473 may be arranged in various shapes in a space between the first digitizer part 471 and the second digitizer part 472 through folding processing. As shown, the connection part 473 can be processed into a shape that is folded multiple times. Thus, the connection part 473 can be at least partially unfolded when the flexible display 230 is folded, and can be restored to its original folded shape when the flexible display 230 is unfolded. As a result, the interference phenomenon in which the connection part 473 contacts nearby layers (e.g., the support plate 450) stacked on the digitizer 470 can be reduced. Thereafter, the digitizer 470 including the connection part 473 formed through folding processing may be bonded to the support plate (e.g., the support plate 450 in FIG. 4) on the rear surface of the flexible display 230.

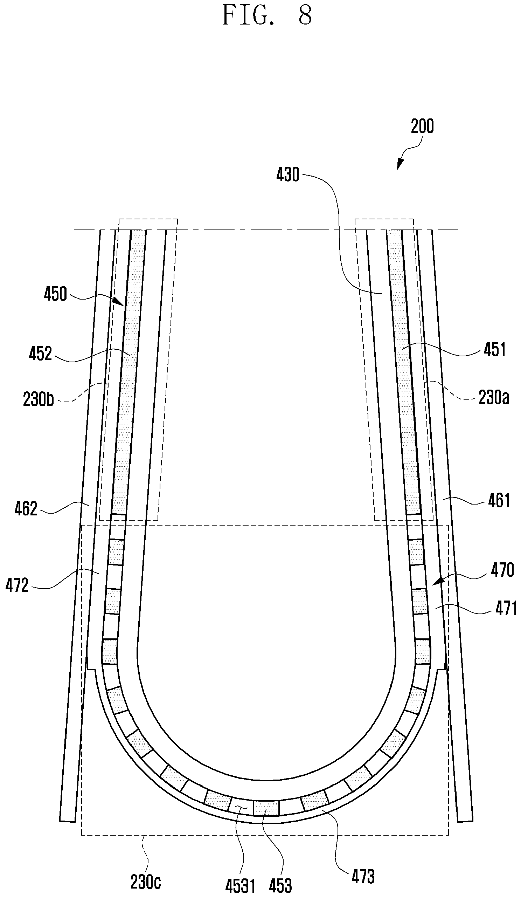

FIG. 8 is a diagram illustrating the arrangement relationship of a digitizer during the folding operation of an electronic device according to various embodiments of the disclosure.

With reference to FIG. 8, the electronic device 200 may include the flexible display 230 and the digitizer 470 bonded to the rear surface of the flexible display 230. According to an embodiment, when the flexible display 230 is folded, the connection part 473 of the digitizer 470 may be elongated to correspond to the amount of change in length of the folding area 230c as the folded portion is unfolded in a region corresponding to the folding area 230c. For example, the connection part 473 may be at least partially unfolded when the flexible display 230 is folded, and may be restored to its original folded shape when the flexible display 230 is unfolded.

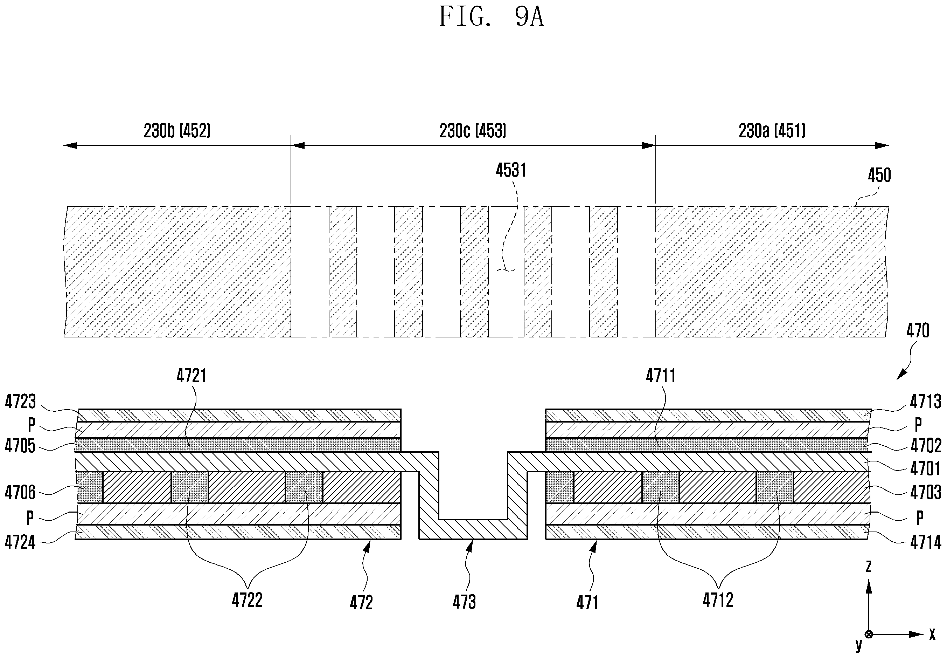

FIGS. 9A to 9E are cross-sectional views of a digitizer according to various embodiments of the disclosure.

In describing the digitizer shown in FIGS. 9A to 9E, components that are substantially the same as those of the digitizer shown in FIG. 6 may be assigned the same reference numerals, and detailed description thereof may be omitted.

With reference to FIG. 9A, the digitizer 470 may include the first digitizer part 471 disposed to correspond to at least a part of the first area 230a of the flexible display 230, the second digitizer part 472 disposed to correspond to at least a part of the second area 230b of the flexible display 230, and the connection part 473 that connects the first and second digitizer parts 471 and 472 and is disposed to correspond to at least a part of the folding area 230c of the flexible display 230.

According to various embodiments, the connection part 473 may be formed through a portion of the first dielectric layer 4701 extending from the first digitizer part 471 to the second digitizer part 472. In this case, the second digitizer part 472 may include a third coverlay 4723 stacked on the third layer 4705, based on the structure of the digitizer 470 shown in FIG. 6, and the second dielectric layer (e.g., the second dielectric layer 4704 in FIG. 6) may be omitted.

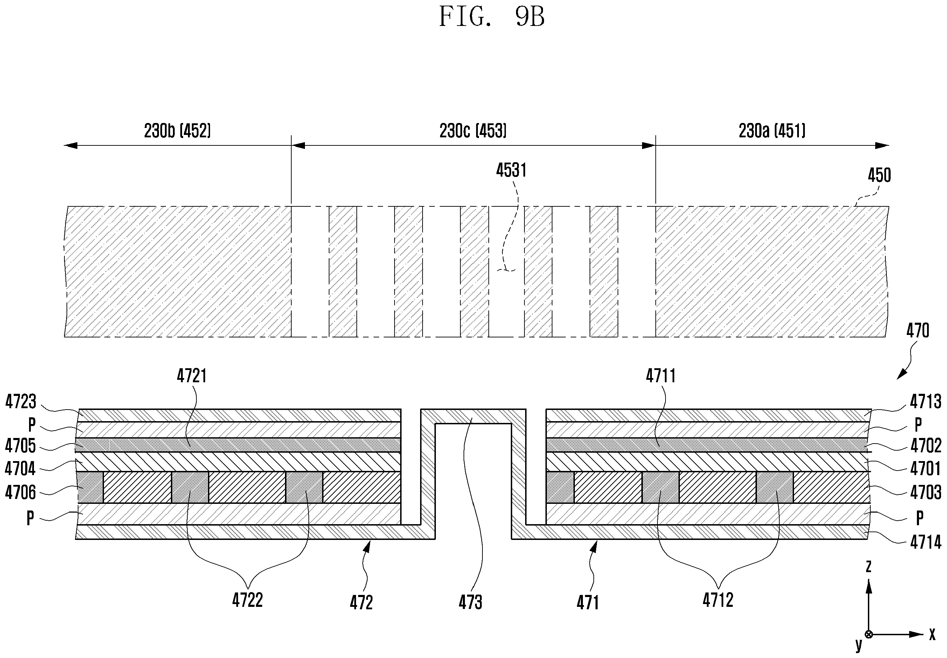

With reference to FIG. 9B,the connection part 473 may be formed through a portion of the second coverlay 4714 extending from the first digitizer part 471 to the second digitizer part 472. In this case, the second digitizer part 472 may include the third coverlay 4723 stacked on the third layer 4705, based on the structure of the digitizer 470 shown in FIG. 6, and the second coverlay (e.g., the second coverlay 4724 in FIG. 6) may be omitted.

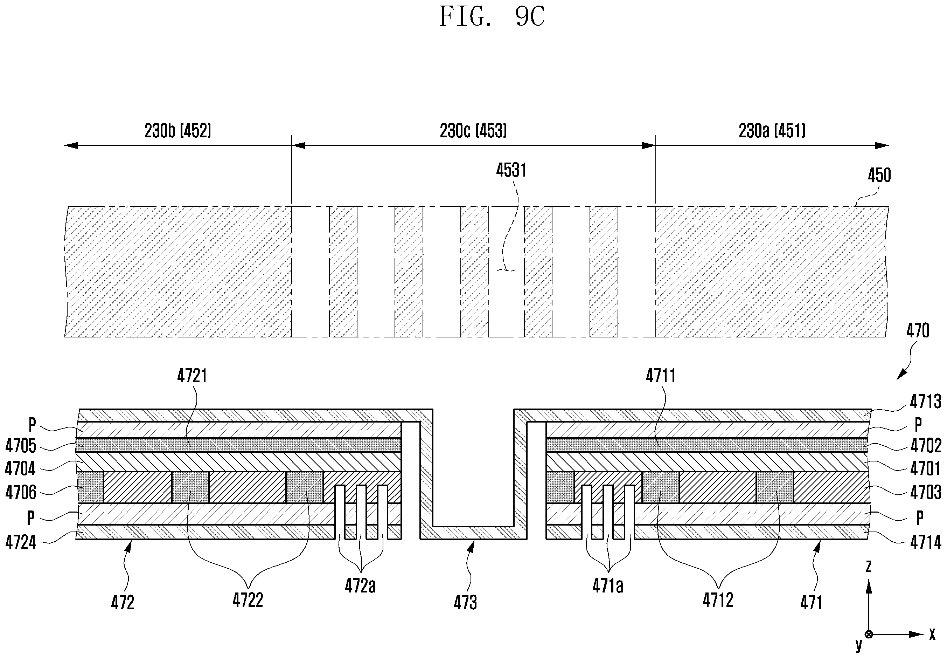

With reference to FIG. 9C, based on the structure of the digitizer 470 shown in FIG. 6, the first digitizer part 471 may have first slits 471a spaced apart from each other at intervals near the connection part 473, and the second digitizer part 472 may have second slits 472a spaced apart from each other at intervals near the connection part 473. According to an embodiment, the first slits 471a may be formed to have a depth extending to at least a portion of the second layer 4703 from the second coverlay 4714. According to an embodiment, the second slits 472a may be formed to have a depth extending to at least a portion of the fourth layer 4706 from the fourth coverlay 4724. According to an embodiment, the first slits 471a and the second slits 472a may be disposed in an area that overlaps at least the folding area 230c when the flexible display 230 is viewed from above, thereby helping improve the flexibility of the digitizer 470 during the folding operation.

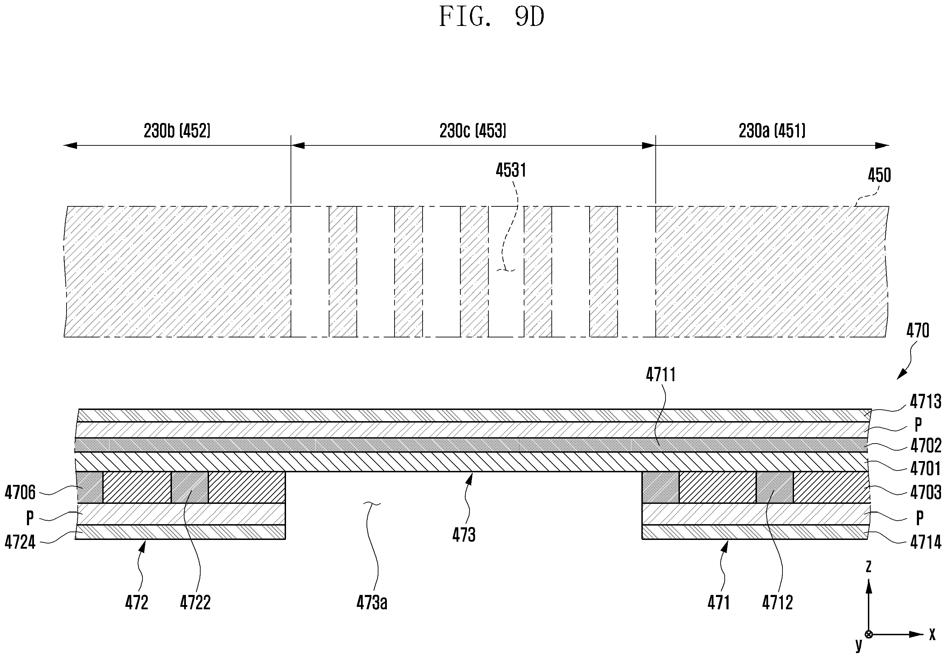

With reference to FIG. 9D, in the digitizer 470, the first dielectric layer 4701, the first layer 4702, and the first coverlay 4713 may be disposed to be shared by the first digitizer part 471, the second digitizer part 472, and the connection part 473. In this case, in the connection part 473, the digitizer 470 may have a space 473a from which the second layer 4703, the plurality of second conductive patterns 4712, the fourth layer 4706, the plurality of fourth conductive patterns 4706, the adhesive member P, the second coverlay 4714, and the fourth coverlay 4724 are omitted. According to an embodiment, this space 473a may be arranged to overlap at least the folding area 230c when the flexible display 230 is viewed from above. Therefore, the connection part 473 formed to have a smaller thickness than the first and second digitizer parts 471 and 472 may help improve the flexibility of the digitizer 470in a region corresponding to the folding area 230c.

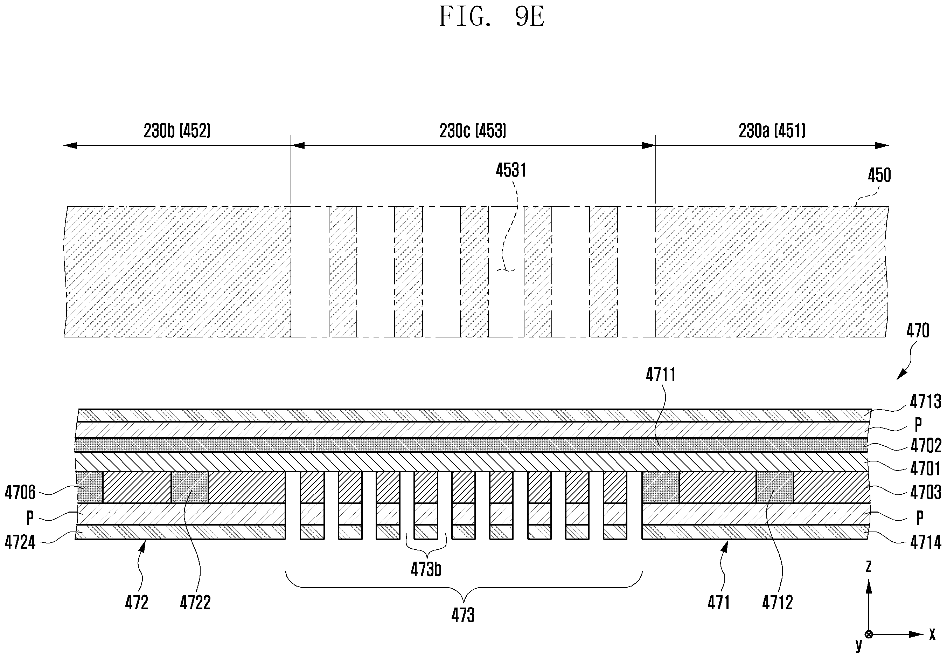

With reference to FIG. 9E, in the digitizer 470, the first dielectric layer 4701, the first layer 4702, and the first coverlay 4713 may be disposed to be shared by the first digitizer part 471, the second digitizer part 472, and the connection part 473. In this case, in the connection part 473, the digitizer 470 may have slits 473b formed to have a separation distance by selectively removing the second layer 4703, the fourth layer 4706, the adhesive member P, the second coverlay 4714, and the fourth coverlay 4724. According to an embodiment, these slits 473b may be arranged to overlap at least the folding area 230c when the flexible display 230 is viewed from above. Therefore, the connection part 473 having the slits 473b may help improve the flexibility of the digitizer 470 in a region corresponding to the folding area 230c.

FIGS. 10A to 10D are cross-sectional views of a digitizer including a connection member according to various embodiments of the disclosure.

In describing the digitizer shown in FIGS. 10A to 10D, components that are substantially the same as those of the digitizer shown in FIG. 6 may be assigned the same reference numerals, and detailed description thereof may be omitted.

With reference to FIG. 10A, the digitizer 470 may include the first digitizer part 471 disposed to correspond to at least a part of the first area 230a of the flexible display 230, the second digitizer part 472 disposed to correspond to at least a part of the second area 230b of the flexible display 230, and a connection member 474 made of an elastic material connecting the first and second digitizer parts 471 and 472. According to an embodiment, the connection member 474 may include a first attached portion 4741 attached to at least a portion of the first coverlay 4713 of the first digitizer part 471 through an adhesive member P, a second attached portion 4742 attached to at least a portion of the third coverlay 4723 of the second digitizer part 472 through an adhesive member P, and a connecting portion 4743 connecting the first and second attached portions 4741 and 4742. According to an embodiment, the connecting portion 4743 may be disposed at a position that overlaps at least the folding area 230c when the flexible display is viewed from above. According to an embodiment, the first attached portion 4741, the second attached portion 4742, and the connecting portion 4743 may be formed integrally.

According to various embodiments, the connection member 474 may be formed of an elastic material with a certain elongation rate, so that the connecting portion 4743 may not require separately an extra length. In this case, the length increased through the elongation of the connecting portion 4743 of the connection member 474 may be equal to or greater than the amount of change in length of the folding area 230c of the flexible display 230. According to an embodiment, the connection member 474 may be formed of at least one of elastomer, rubber, silicone, or urethane.

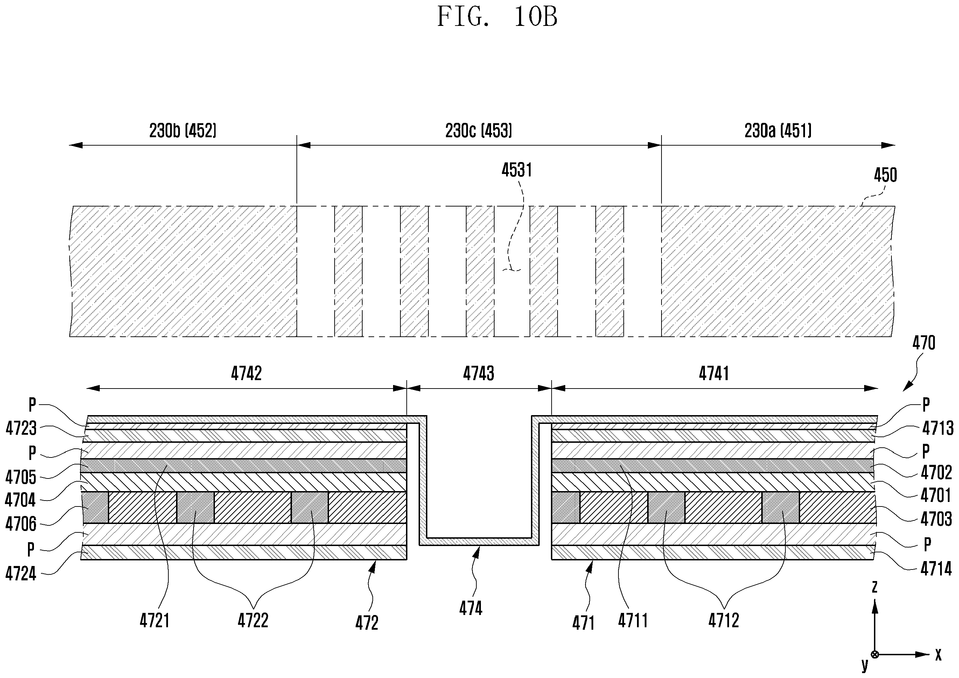

With reference to FIG. 10B, in the arrangement structure of the connection member 474 in FIG. 10A, the connecting portion 4743 may be formed into a shape having an extra length through folding processing in a space between the first digitizer part 471 and the second digitizer part 472. In this case, the connection member 474 may be formed of a material (e.g., PI) other than an elastic material.

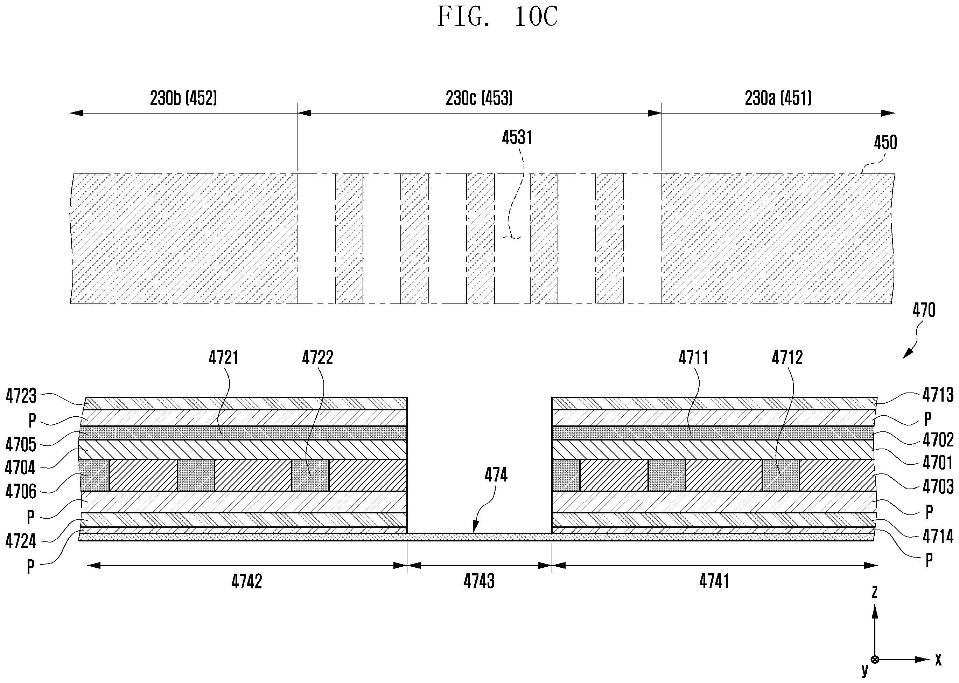

With reference to FIG. 10C, in the connection member 474 of the digitizer 470, the first attached portion 4741 may be attached to the second coverlay 4714 of the first digitizer part 471 through the adhesive member P, and the second attached portion 4742 may be attached to the fourth coverlay 4724 of the second digitizer part 472 through the adhesive member P.

According to various embodiments, the connection member 474 may be formed of an elastic material with a certain elongation rate, so that the connecting portion 4743 may not require separately an extra length. In this case, the length increased through the elongation of the connecting portion 4743 of the connection member 474 may be equal to or greater than the amount of change in length of the folding area 230c of the flexible display 230. According to an embodiment, the connection member 474 may be formed of at least one of elastomer, rubber, silicone, or urethane.

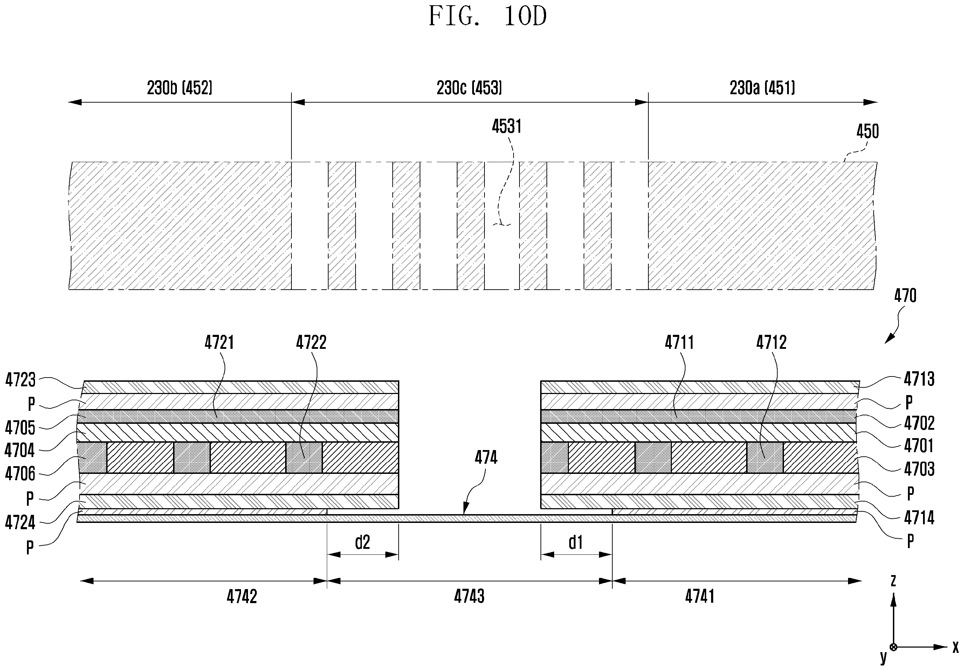

With reference to FIG. 10D, in the arrangement structure of the connection member 474 in FIG. 10C, the connection member 474 may have a first non-attached length d1 without the adhesive member P in the first digitizer part471 and/or a second non-attached length d2 without the adhesive member P in the second digitizer part 472. According to an embodiment, the first non-attached length d1 and/or the second non-attached length d2 may be formed to be about 4 to 6 times the separation distance between the first digitizer part 471 and the second digitizer part 472. For example, even if the same material is used, the connecting portion 4743 can secure a sufficient elongation length corresponding to the change in length of the folding area 230c through expansion of the non-attached lengths d1 and d2.

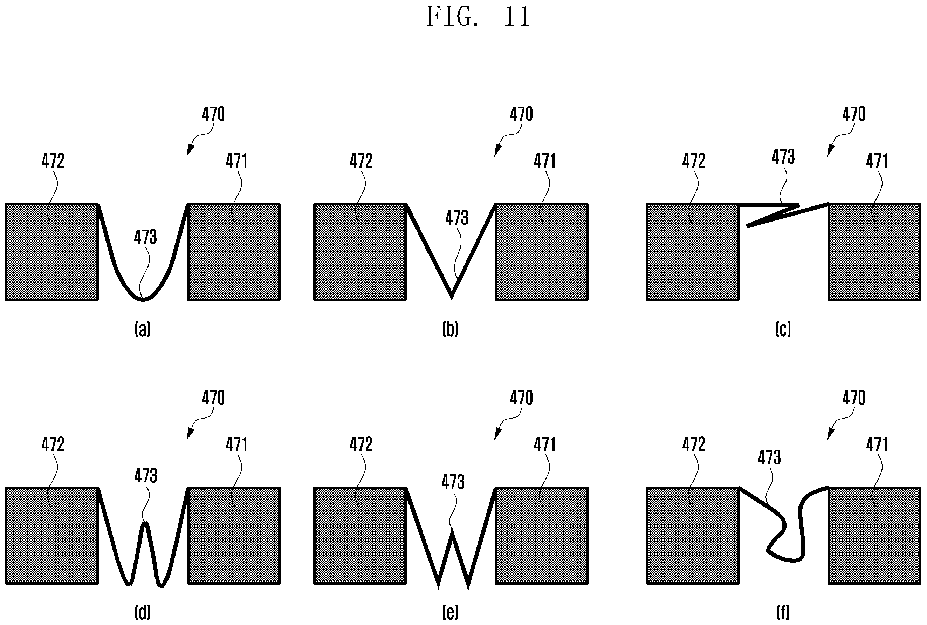

FIG. 11 is a schematic diagram showing digitizers having various connection structures according to various embodiments of the disclosure.

With reference to FIG. 11, the digitizer 470 may include the first digitizer part 471, the second digitizer part 472, and the connection part 473 connecting the first and second digitizer parts 471 and 472. For example, the connection part 473 may be replaced with the connection member 474 of FIG. 10A. According to an embodiment, the connection part 473 may have a structure folded into various shapes through folding processing so that interference with nearby structures can be avoided even when the digitizer 470 is folded and unfolded. For example, the connection part 473 may have various structures including a 'U' shape as shown in (a), a 'V' shape as shown in (b), a 'z' shape as shown in (c), a 'W' shape with a curved folded part as shown in (d), a 'W' shape with a sharp folded part as shown in (e), and a modified 'U' shape as shown in (f). According to embodiments, the connection part may be formed in various shapes (not shown) that allow restoration to the original folded shape when transitioning from the folded state to the unfolded state.

According to various embodiments, an electronic device (e.g., the electronic device 200 in FIG. 4) may include a first housing (e.g., the first housing 210 in FIG. 6), a second housing (e.g., the second housing 220 in FIG. 6), a hinge device foldably connecting the first housing and the second housing, a flexible display (e.g., the flexible display 230 in FIG. 6) disposed to be supported by the first and second housings and including a folding area (e.g., the folding area 230c in FIG. 6), and a digitizer (e.g., the digitizer 470 in FIG. 6) disposed under the flexible display. The digitizer may include a first digitizer part (e.g., the first digitizer part 471 in FIG. 6) corresponding to at least a portion of the first housing, a second digitizer part (e.g., the second digitizer part 472 in FIG. 6) corresponding to at least a portion of the second housing, and a connection part (e.g., the connection part 473 in FIG. 6) connecting the first and second digitizer parts. The connection part may be formed to have an extra length greater than an amount of changes in length of the folding area in a folded state.

According to various embodiments, the connection part may be disposed at a position that overlaps at least the folding area when the flexible display is viewed from above.

According to various embodiments, the extra length may be formed to be in a range of 120% to 150% of the amount of changes in length.

According to various embodiments, the extra length may be formed to be substantially equal to the amount of changes in length.

According to various embodiments, the flexible display may include a display panel and a support plate disposed between the display panel and the digitizer. The support plate may have a plurality of openings formed in an area overlapping with the folding area when the flexible display is viewed from above. Flexibility of the folding area may be determined depending on an arrangement density and/or shape of the plurality of openings.

According to various embodiments, the connection part may be disposed at least at a position overlapping with the plurality of openings when the flexible display is viewed from above.

According to various embodiments, the connection part may have a folded structure formed in a specified shape through folding processing in a space between the first digitizer part and the second digitizer part.

According to various embodiments, the folded structure may be processed to be at least partially unfolded in the folded state and restored to an original state in an unfolded state.

According to various embodiments, the electronic device may further include first slits (e.g., the first slits 471a in FIG. 9C) formed in the first digitizer part and/or second slits (e.g., the second slits 472a in FIG. 9C) formed in the second digitizer part near the connection part in a stacking direction of the digitizer.

According to various embodiments, the first slits and/or the second slits may at least partially overlap the folding area when the flexible display is viewed from above.

According to various embodiments, the connection part may be formed through at least one layer of the first digitizer part extending from the first digitizer part to the second digitizer part.

According to various embodiments, the connection part may be a part of a connection member attached to a top or bottom of the first and second digitizer parts through an adhesive member.

According to various embodiments, the connection part may be formed of an elastic material having an elongation rate capable of accommodating the amount of changes in length of the folding area.

According to various embodiments, the connection member may further have a first non-attached length (e.g., the first non-attached length d1 in FIG. 10) not attached to the first digitizer part from the connection part, and/or a second non-attached length (e.g., the second non-attached length d2 in FIG. 10) not attached to the second digitizer part from the connection part.

According to various embodiments, the first non-attached length and/or the second non-attached length may be set to 4 to 6 times an arrangement distance between the first digitizer part and the second digitizer part.

According to various embodiments, the first digitizer part may include a first dielectric layer, a plurality of first conductive patterns disposed on the top of the first dielectric layer, a plurality of second conductive patterns disposed on the bottom of the first dielectric layer, a first coverlay covering the plurality of first conductive patterns, and a second coverlay covering the plurality of second conductive patterns. In addition, the second digitizer part may include a second dielectric layer, a plurality of third conductive patterns disposed on the top of the second dielectric layer, a plurality of fourth conductive patterns disposed on the bottom of the second dielectric layer, a third coverlay covering the plurality of third conductive patterns, and a fourth coverlay covering the plurality of fourth conductive patterns. The connection part may be formed by the first coverlay to cover the plurality of third conductive patterns, replacing the third coverlay, or formed by the second coverlay to cover the plurality of fourth conductive patterns, replacing the fourth coverlay, or formed by the first dielectric layer extending to the second digitizer part, replacing the second dielectric layer.

According to various embodiments, the digitizer (e.g., the digitizer 470 in FIG. 6) may include the first digitizer part (e.g., the first digitizer part 471 in FIG. 6), the second digitizer part(e.g., the second digitizer part 472 in FIG. 6), and the connection part (e.g., the connection part 473 in FIG. 6) connecting the first and second digitizer parts and formed foldably. The connection part may be formed to have an extra length greater than an arrangement distance between the first and second digitizer parts.

According to various embodiments, the connection part may have a folded structure formed in a specified shape through folding processing in a space between the first digitizer part and the second digitizer part.

According to various embodiments, the folded structure may be processed to be at least partially unfolded in the folded state and restored to an original state in an unfolded state.

According to various embodiments, the connection part may be a part of a connection member formed of an elastic material attached to a top or bottom of the first and second digitizer parts through an adhesive member.

Meanwhile, the embodiments disclosed in the specification and drawings are only presented as specific examples to easily explain the technical contents of the disclosure and help the understanding of the disclosure, and it is not intended to limit the scope of the disclosure. Accordingly, it should be interpreted that all changes or modifications derived from the subject matter of the disclosure are included in the scope of various embodiments of the disclosure.

## Claims

1. An electronic device comprising:
a first housing;
a second housing;
a hinge device foldably connecting the first housing and the second housing;
a flexible display disposed to be supported by the first and second housings and including a folding area; and
a digitizer disposed under the flexible display,
the digitizer including:
a first digitizer part corresponding to at least a portion of the first housing;
a second digitizer part corresponding to at least a portion of the second housing; and
a connection part connecting the first and second digitizer parts,
wherein the connection part is formed to have an extra length greater than an amount of changes in length of the folding area in a folded state.

2. The electronic device of claim 1, wherein the connection part is disposed at a position that overlaps at least the folding area when the flexible display is viewed from above.

3. The electronic device of claim 1, wherein the extra length is formed to be in a range of 120% to 150% of the amount of changes in length.

4. The electronic device of claim 1, wherein the extra length is formed to be substantially equal to the amount of changes in length.

5. The electronic device of claim 1, wherein the flexible display includes:
a display panel; and
a support plate disposed between the display panel and the digitizer,
wherein the support plate has a plurality of openings formed in an area overlapping with the folding area when the flexible display is viewed from above, and
wherein flexibility of the folding area is determined depending on an arrangement density and/or shape of the plurality of openings.

6. The electronic device of claim 5, wherein the connection part is disposed at least at a position overlapping with the plurality of openings when the flexible display is viewed from above.

7. The electronic device of claim 1, wherein the connection part has a folded structure formed in a specified shape through folding processing in a space between the first digitizer part and the second digitizer part.

8. The electronic device of claim 7, wherein the folded structure is processed to be at least partially unfolded in the folded state and restored to an original state in an unfolded state.

9. The electronic device of claim 1, further comprising:
first slits formed in the first digitizer part and/or second slits formed in the second digitizer part near the connection part in a stacking direction of the digitizer.

10. The electronic device of claim 9, wherein the first slits and/or the second slits at least partially overlap the folding area when the flexible display is viewed from above.

11. The electronic device of claim 1, wherein the connection part is formed through at least one layer of the first digitizer part extending from the first digitizer part to the second digitizer part.

12. The electronic device of claim 1, wherein the connection part is a part of a connection member attached to a top or bottom of the first and second digitizer parts through an adhesive member.

13. The electronic device of claim 12, wherein the connection part is formed of an elastic material having an elongation rate capable of accommodating the amount of changes in length of the folding area.

14. The electronic device of claim 13, wherein the connection member further has:
a first non-attached length not attached to the first digitizer part from the connection part, and/or
a second non-attached length not attached to the second digitizer part from the connection part.

15. The electronic device of claim 14, wherein the first non-attached length and/or the second non-attached length is set to 4 to 6 times an arrangement distance between the first digitizer part and the second digitizer part.
